# EUROPEAN PATENT SPECIFICATION

(11) **EP 2 360 070 B1**
(45) Date of publication and mention of the grant of the patent: **10.09.2014**
(21) Application number: 10001481.0
(22) Date of filing: 12.02.2010
(51) Int. Cl.: B60S 1/40

(54) **Wiper connector**
Wischersteckverbinder
Attache d'essuie-glace

(43) Date of publication of application: 24.08.2011
(73) Proprietor: Unipoint Electric MFG. Co., Ltd., Taipei City 106, Taiwan (TW)
(72) Inventor: Ching Chuan, Chien, Da-an District Taipei City 106 (TW)
(74) Representative: advotec.

(56) References cited:
- EP-A2- 1 479 576
- DE-A1- 19 951 003
- DE-A1-102007 058 091
- US-A1- 2006 059 647
- US-A1- 2007 199 174
- US-A1- 2007 289 079
- US-A1- 2008 058 195
- US-A1- 2010 005 609

## Description

### FIELD OF THE INVENTION

The present invention relates to a wiper connector, and more particularly to a wiper connector which can connect with different types of wiper arms.

### BACKGROUND OF THE INVENTION

Automobiles are popular vehicles in the modern society. Particularly in blowy and rainy weather, they not only can serve as means of transportation, but also have better effect of wind- and rain-proofing than bicycles or motorcycles.

However, the types of wiper arms in front of windshields of automobiles vary with their different types of various brands on the market. Therefore, when a user needs to change the wiper arm, the user must purchase a wiper connector that is compatible with the wiper arm or else the wiper blade cannot be mounted on the automobile. Accordingly, this causes inconvenience to users in assembly and use.

US 2010/0005609 A1 discloses a device for connecting a flat wiper blade to various wiper arms. The connecting device includes: a joint fixed to a frame of a flat wiper blade; a bracket snap-mounted on the joint; and an adaptor mounted to the bracket. The bracket has a pivot shaft extending perpendicular to a length direction of the frame and haying a pivot bore therethrough. The adaptor has a pair of side wall portions. Fitting apertures are perforated in the side wall portions. The adaptor is mounted to the bracket in such a manner that both ends of the pivot shaft are fitted to the fitting apertures.

### SUMMARY OF THE INVENTION

In light of the problems of the prior art, an object of the present invention is to provide a wiper connector so as to solve the problems of inconvenience in assembly and use.

According to the object of the present invention, there is provided a wiper connector comprising housing, a cover, and a first connector, as claimed in claim 1. The housing has two sides, a central part and a hollow part, wherein the central part and the hollow part are located between the two sides and respectively adjacent to one end and another end of the housing, and further includes at least one locating column, at least one position limiting blind hole, and a first joint portion. The locating column is a protruding block and convexly provided on one side surface between both ends of the housing, and one end of the protruding block is provided with a bevel surface. The position limiting blind hole is concavely provided on one side surface of the housing and located between the locating column and one end of the housing. The first joint portion is disposed on the other end of the housing. Moreover, the cover includes a second joint portion and a locating hole. The second joint portion is disposed on one end of the cover, and the second joint portion is connected with the first joint portion to allow the cover to be pivotally connected to the other end of the housing. The locating hole is provided on the other end of the housing and connected to the locating column. Furthermore, the first connector includes an upper arm, a first side wall, and a second side wall. One end of the first side wall extends toward the position limiting blind hole and is provided with a first protruding point. The first protruding point allows the first connector to be assembled into the position limiting blind hole. One end of the second side wall is connected with the other end of the first side wall by the upper arm. Two corresponding side surfaces of the housing are sandwiched between the second side wall and the first protruding point. The width of the housing is increased after the first protruding point of the first side wall and the position limiting blind hole are assembled.

As described above, the wiper connector of the present invention can connect different combinations of wiper arms with one wiper by the assembly of the housing, the cover, the first connector, and optionally the second connector.

### BRIEF DESCRIPTION OF THE DRAWINGS

FIG. 1 is a schematic view of a wiper connector according to the present invention;
FIG. 2(A) is a schematic view of a bottom surface of a wiper connector according to the present invention;
FIG. 2(B) is a schematic view of a side surface of a wiper connector according to the present invention;
FIG. 2(C) is a schematic view of a wiper connector according to the present invention viewed along the cross section A-A;
FIG. 2(D) is a schematic view of a wiper connector according to the present invention viewed along the cross section B-B;
FIG. 3 is a schematic view showing a wiper connector according to the present invention assembled with a first wiper arm;
FIG. 4 is a schematic view showing a wiper connector according to the present invention assembled with a second wiper arm;
FIG. 5(A) is a schematic view showing a wiper connector according to the present invention assembled with a third wiper arm;
FIG. 5(B) is a schematic view showing a wiper connector according to the present invention assembled with a third wiper arm viewed along the cross section C-C;
FIG. 6(A) is a schematic view showing a wiper connector according to the present invention assembled with a fourth wiper arm;
FIG. 6(B) is a schematic view showing a wiper connector according to the present invention assembled with a fourth wiper arm viewed along the cross section D-D;
FIG. 7(A) is a schematic view showing a wiper connector according to the present invention assembled with a fifth wiper arm;
FIG. 7(B) is a schematic view showing a wiper connector according to the present invention assembled with a fifth wiper arm viewed along the cross section E-E;
FIG. 8(A) is a schematic view showing a wiper connector according to the present invention assembled with a sixth wiper arm;
FIG. 8(B) is a schematic view showing a wiper connector according to the present invention assembled with a sixth wiper arm viewed along the cross section F-F;
FIG. 9 is a schematic view showing a wiper connector according to the present invention assembled with a seventh wiper arm;
FIG. 10 is a schematic view showing a wiper connector according to the present invention assembled with an eighth wiper arm;
FIG. 11 is a schematic view showing a wiper connector according to the present invention assembled with a ninth wiper arm.

### DETAILED DESCRIPTION OF THE PREFERRED EMBODIMENTS

Embodiments of the wiper connector according to the present invention will be described below with reference to the related drawings. For the convenience of understanding the description, the same elements in the embodiments will be given the same reference numerals.

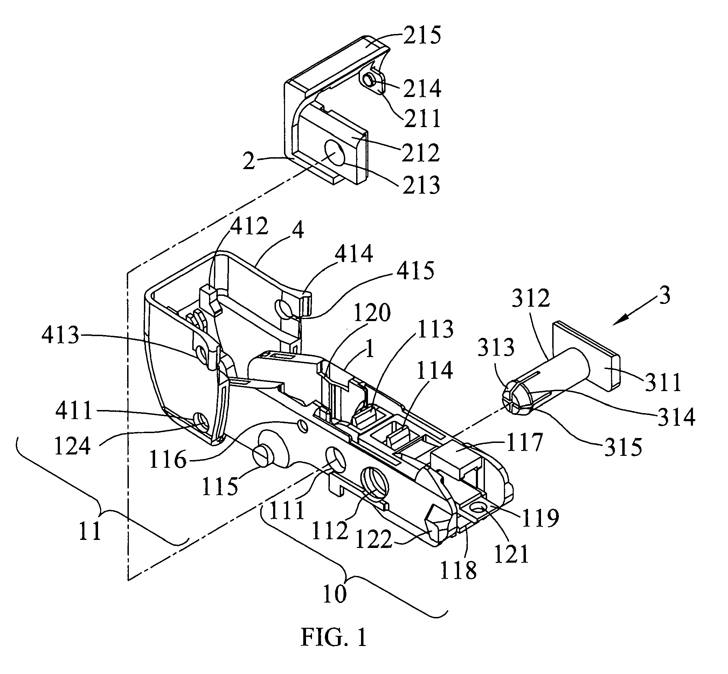

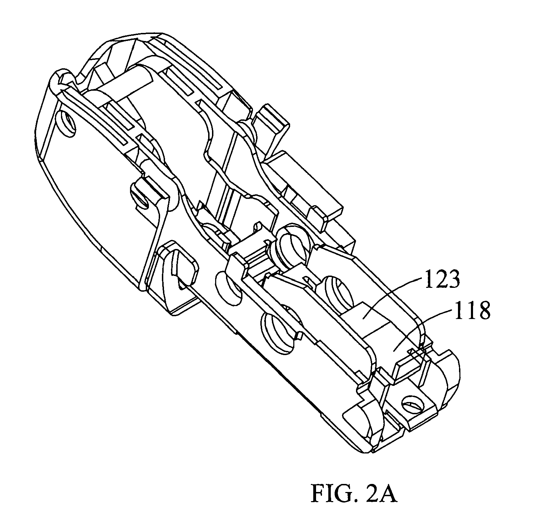

Referring to FIGS. 1 and 2(A), there are shown schematic views of a wiper connector according to the present invention. In these figures, a wiper connector comprises a housing 1, a first connector 2, a second connector 3, and a cover 4. In the present invention, the housing 1 has two sides, a central part 10 and a hollow part 11, wherein the central part 10 and the hollow part 11 are located between the two sides and respectively adjacent to one end and another end of the housing 1, and includes a first position limiting through hole 111, a second position limiting through hole 112, a first engagement portion 113, a second engagement portion 114, a locating column 115, a position limiting blind hole 116, a pressing portion 117, a non-slip portion 118, an engagement piece 119, a position limiting wall 120, a through hole 121, an outer bump 122, a non-slip surface 123, and a first joint portion 124.

Turning to FIG. 1, the first position limiting through hole 111 is provided between both ends of the housing 1, and passes through the central part 10 and two sides of the housing 1. The first engagement portion 113 is disposed on the top of the housing 1 and extends into the first position limiting through hole 111.

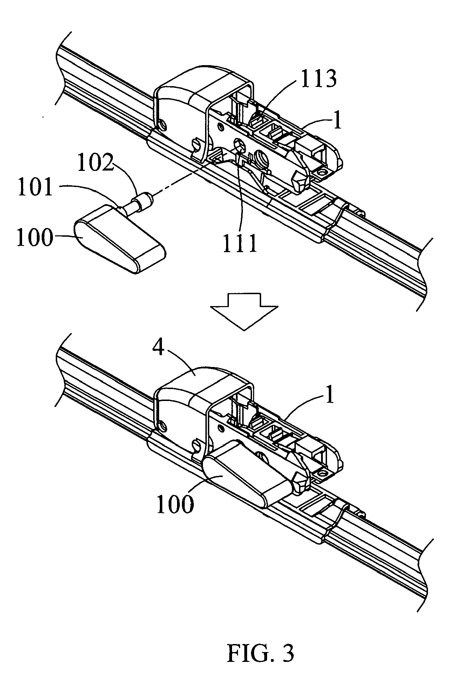

Referring to FIG. 3, there is shown a schematic view showing a wiper connector according to the present invention assembled with a first wiper arm. The first connecting rod 101 of the first wiper arm 100 is passed into the first position limiting through hole 111. The first engagement portion 113 engages with the first neck portion 102 of the connecting rod 101. The first wiper arm 100 is a 3/16 inch (approximately 4.8 mm) diameter pin type wiper arm. Moreover, when the first wiper arm 100 is disassembled, the first wiper arm 100 can be successfully exited by reversely applying a force to the first neck portion 102, which has been inserted into the first position limiting through hole 111, along the insertion direction.

Again referring to FIG. 1, the second position limiting through hole 112 is provided between one end of the housing 1 and the first position limiting through hole 111, and passes through the central part 10 and two sides of the housing 1. The diameter of the first position limiting through hole 111 is different from the diameter of the second position limiting through hole 112. The second engagement portion 114 is disposed on the top of the housing 1 and extends into the second position limiting through hole 112.

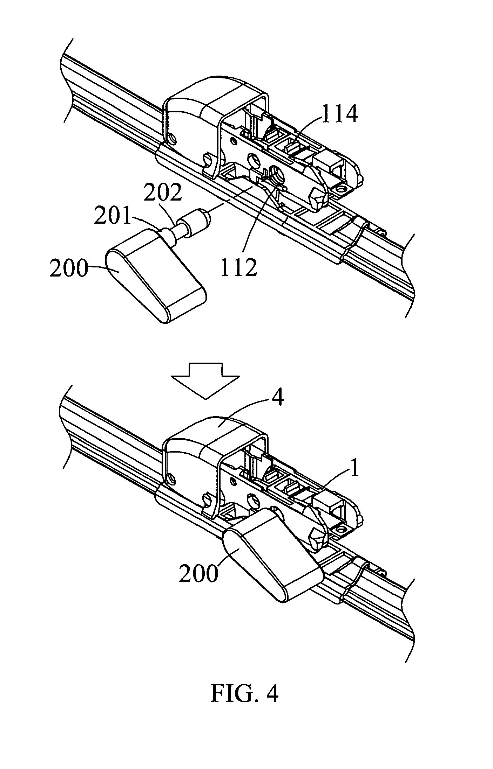

Referring to FIG. 4, there is shown a schematic view showing a wiper connector according to the present invention assembled with a second wiper arm. The second connecting rod 201 of the second wiper arm 200 is passed into the second position limiting through hole 112. The second engagement portion 114 engages with the second neck portion 202 of the second connecting rod 201. The second wiper arm 200 is a 1/4 inch (6.35 mm) diameter pin type wiper arm. Moreover, when the second wiper arm 200 is disassembled, the second wiper arm 200 can be successfully exited by reversely applying a force to the second neck portion 202, which has been inserted into the second position limiting through hole 112, along the insertion direction.

Again referring to FIG. 1, the locating column 115 is convexly provided on one side surface of the housing 1 and located between the first position limiting through hole 111 and the other end of the housing 1. The position limiting blind hole 116 is concavely provided on one side surface of the housing 1 and located between the first position limiting through hole 111 and the locating column 115. The outer bump 122 is convexly provided at a position between two sides of the housing 1 and adjacent to one end of the housing 1.

The cover 4 includes a second joint portion 411, a position limiting block 412, a locating hole 413, and a skirt portion 414. The second joint portion 411 is connected with the first joint portion 124 of the housing 1 to allow the cover 4 to be pivotally connected to the other end of the housing 1. The locating hole 413 has a breakthrough hole 415 that is provided on the other end of cover 4. When the cover 4 is closed on the housing 1, the locating hole 413 can be connected to the locating column 115. The position limiting block 412 is provided on the inner surface of the cover 4. When the cover 4 is closed on the housing 1, the position limiting block 412 just abuts against the top surface of the housing 1 and there still remains a gap between the cover 4 and the top surface of the housing 1. When a wiper arm is mounted, the position limiting block 412 abuts against the wiper arm. The skirt portion 414 allows the user to separate the cover 4 from the housing 1 by the skirt portion 414.

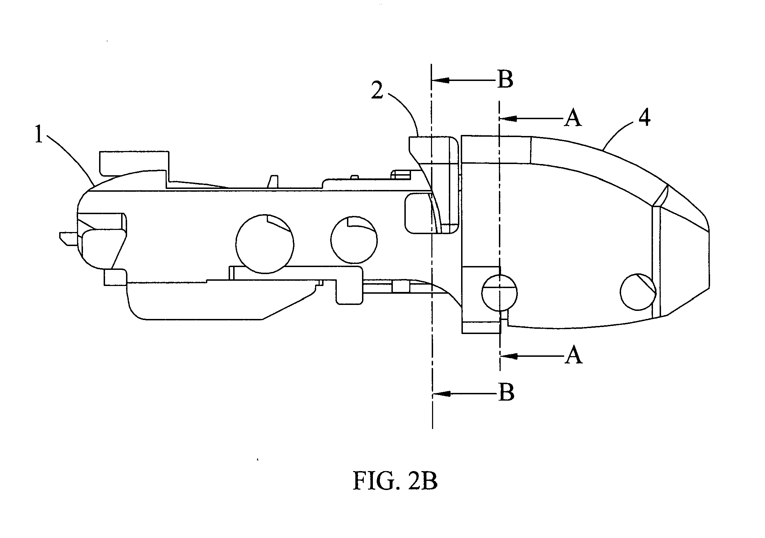

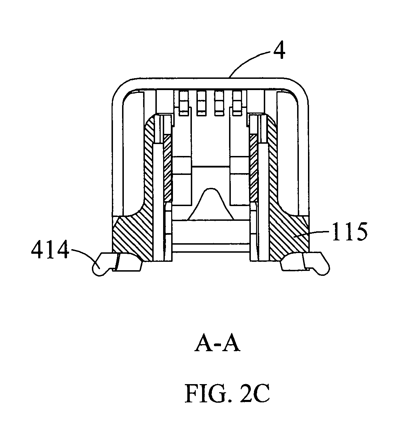

Turning to FIG. 2(C), this figure is FIG. 2(B) viewed along the cross section A-A. The thickness of the skirt portion 414 is greater than the thickness of the remaining portions of the cover 4, so it is not easy to break the cover 4 when the user shoves off the skirt portion 414 to separate the cover 4 from the housing 1. Moreover, one end of the locating column 115 is provided with a bevel surface to facilitate the locating hole 413 engaging with the locating column 115 by the breakthrough hole 415.

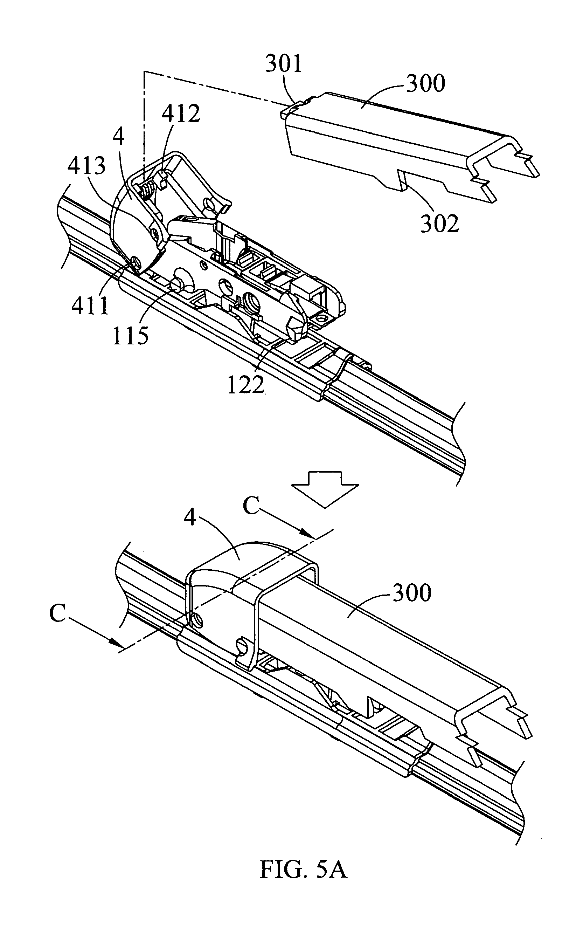

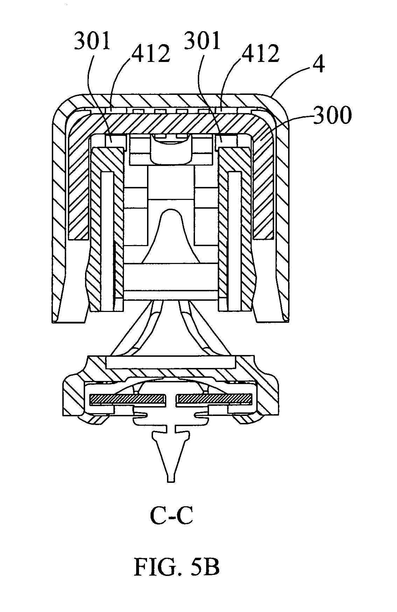

Referring to FIG. 5(A), there is shown a schematic view showing a wiper connector according to the present invention assembled with a third wiper arm. The third wiper arm 300 has on one end thereof a first position limiting piece 301 and has on each of two side surfaces thereof a first position-limiting edge 302. When the cover 4 is flipped over away from the housing 1, the third wiper arm 300 is fitted on the housing 1 to surround the top surface and two side surfaces of the housing 1. The first position-limiting edge 302 abuts against the outer bump 122. Then, the cover 4 is closed on the housing 1. In addition, referring to FIG. 5(B), this figure is FIG. 5(A) viewed along the cross section C-C. In this figure, the position limiting block 412 engages with the first position limiting piece 301 and the cover 4 covers a part of the third wiper arm 300, so that the third wiper arm 300 is closely connected to the wiper connector. The third wiper arm 300 is a mounted type wiper arm. Moreover, in disassembly of the third wiper arm 300, the cover 4 can be flipped over after a force is applied to the skirt portion 414 reversely relative to a closing direction of the cover 4. Then, a force is applied to lift the third wiper arm 300 and thus the third wiper arm 300 is separated from the housing 2, so that the third wiper arm 300 can be successfully disassembled.

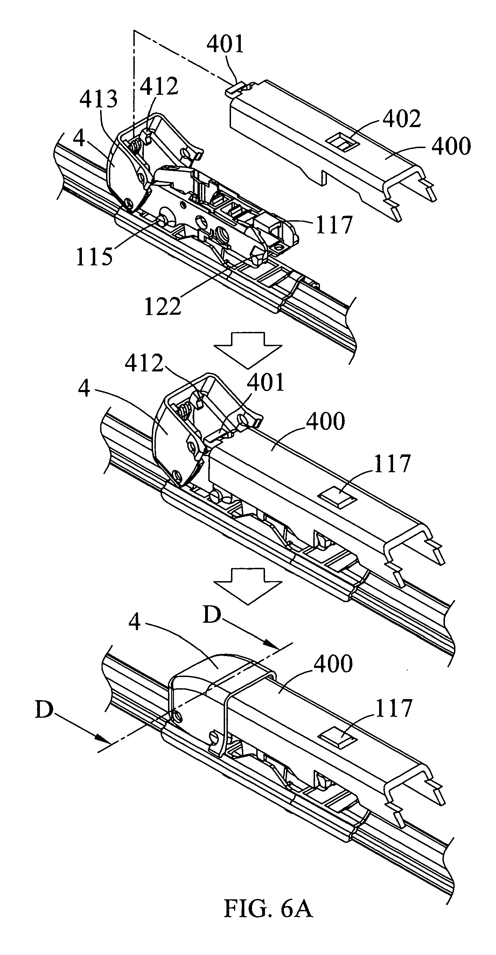

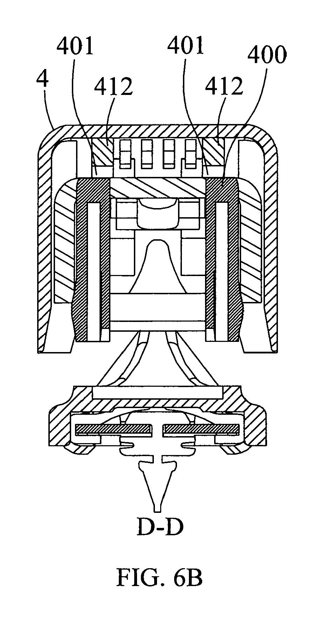

Again referring to FIG. 1, the pressing portion 117 is convexly disposed on the top surface of the housing 1 and between the second engagement portion 114 and one end of the housing 1. Referring to FIG. 6, there is shown a schematic view showing a wiper connector according to the present invention assembled with a fourth wiper arm. The structure and assembling method of the fourth wiper arm 400 are the same as those of the third wiper arm 300. The difference between the two wiper arms is that the top surface of the fourth wiper arm 400 is further provided with a first opening 402. When the fourth wiper arm is assembled to the housing 1, the first opening 402 is connected with the pressing portion 117. In addition, referring to FIG. 6(B), this figure is FIG. 6(A) viewed along the cross section D-D. In this figure, the position limiting block 412 engages with the second position limiting piece 401 provided on one end of the fourth wiper arm 400. The fourth wiper arm 400 is an opening-mounted wiper. Moreover, in disassembly of the fourth wiper arm 400, the cover 4 can be flipped over after a force is applied to the skirt portion 414 reversely relative to a closing direction of the cover 4. Then, a force is applied to lift the fourth wiper arm 400 and thus the fourth wiper arm 400 is separated from the housing 2, so that the fourth wiper arm 400 can be successfully disassembled.

Again referring to FIG. 1, the position limiting wall 120 is provided on an inner wall at two sides of the housing 1 between the position limiting blind hole 116 and the locating column 115.

Again referring to FIG. 2(A), the non-slip portion 118 is provided at a position between two sides of the housing 1 and adjacent to the second position limiting through hole 112, and extends to one end of the housing 1. A non-slip surface 123 extends from the non-slip portion 118 for the aid of fastening various types of wiper arms on the housing 1.

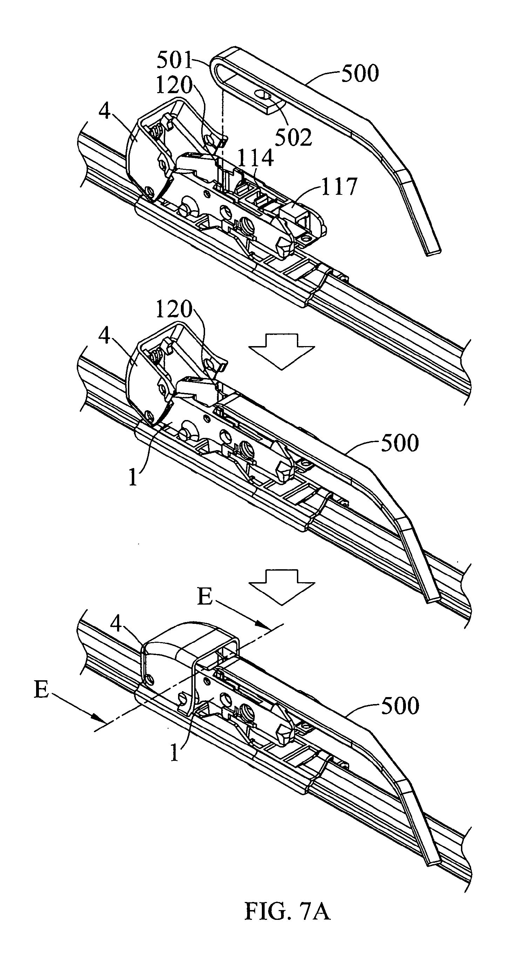

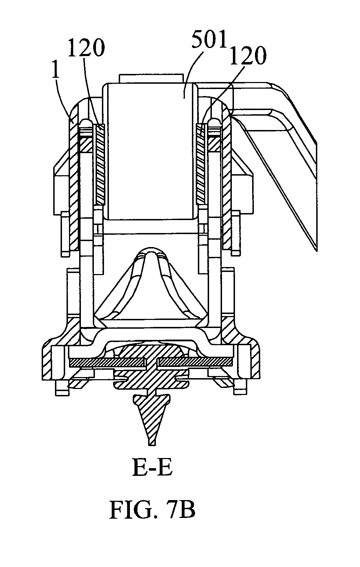

Referring to FIGS. 7(A) and 7(B), there are shown a schematic view showing a wiper connector according to the present invention assembled with a fifth wiper arm and the schematic view viewed along the cross section E-E. In this figure, the fifth wiper arm 500 has on one end thereof a first hook fixed end 501 and has a second opening 502. When the cover 4 is flipped over away from the housing 1, the fifth wiper arm 500 is passed into a space formed between the two sides of the housing 1 and the fifth wiper arm 500 is pressed downward toward the pressing portion 117 by the application of a slightly larger force. Then, the cover 4 is closed on the housing 1. At this time, the position limiting walls 120 located on the two inner side walls of the housing 1 engages with the first hook fixed end 501 so that the position of the fifth wiper arm 500 is limited between the two inner sides of the housing 1. The bottom surface of the second engagement portion 114 engages with the second opening 502, and the end of the first hook fixed end 501 extending toward the second opening 502 abuts against the vertical plane of the non-slip surface 123 adjacent to the second position limiting through hole 112 to avoid swinging and vibration of the fifth wiper arm 500 in the vertical direction. The fifth wiper arm 500 is a 9*3 slot and hook type wiper. Moreover, in disassembly of the fifth wiper arm 500, the cover 4 can be flipped over after a force is applied to the skirt portion 414 reversely relative to a closing direction of the cover 4. Afterwards, the fifth wiper arm 500 is pushed toward the cover 4 slightly by the application of force, so that the fifth wiper arm 500 is disengaged from the position limiting walls 120. Then, a force is applied to lift the fifth wiper arm 500 so that the fifth wiper arm 500 can be successfully disassembled.

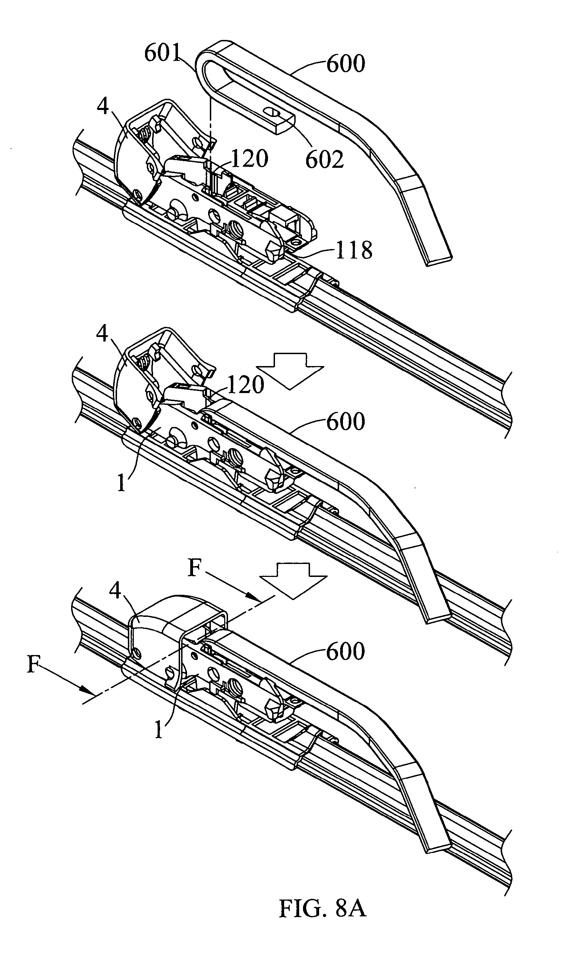

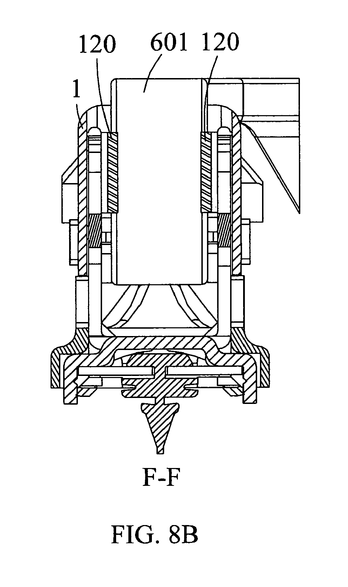

Referring to FIGS. 8(A) and 8(B), there are shown a schematic view showing a wiper connector according to the present invention assembled with a sixth wiper arm and the schematic view viewed along the cross section F-F. The structure and assembling method of the sixth wiper arm 600 are the same as those of the fifth wiper arm 500. The difference between the two wiper arms is that the size of a second hook fixed end 601 of the sixth wiper arm 600 is larger than the size of the first hook fixed end 501. The sixth wiper arm 600 also includes a third opening 602. After the sixth wiper arm 600 has been assembled with the housing 1, the sixth wiper arm 600is passed into the housing 1 and the sixth wiper arm 600 is fastened in the housing 1 by the pressing portion 117, the non-slip portion 118, and the position limiting walls 120. The position limiting walls 120 located on the two inner side walls of the housing 1 engages with the second hook fixed end 601 so that the position of the sixth wiper arm 600 is limited between the two inner sides of the housing 1. The end of the second hook fixed end 601 extending toward the third opening 602 overpasses the non-slip surface 123 and abuts against the non-slip portion 118 to avoid swinging and vibration of the sixth wiper arm 600 in the vertical direction. The sixth wiper arm 600 is a 9*4 slot and hook type wiper arm. Moreover, in disassembly of the sixth wiper arm 600, the cover 4 can be flipped over after a force is applied to the skirt portion 414 reversely relative to a closing direction of the cover 4. Afterwards, the sixth wiper arm 600 is pushed toward the cover 4 slightly by the application of force, so that the sixth wiper arm 600 is disengaged from the position limiting walls 120. Then, a force is applied to lift the sixth wiper arm 600, so that the sixth wiper arm 600 can be successfully disassembled.

Again referring to FIG. 1, the engagement piece 119 is provided between two sides of the housing 1 and between the pressing portion 117 and the non-slip portion 118, and protrudes out of one end of the housing 1. The portion of the engagement piece 119 protruding out of the housing 1 is provided with a through hole 121.

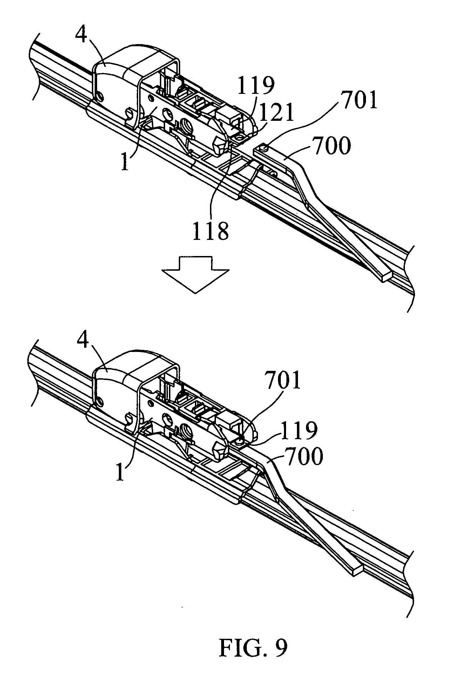

Referring to FIG. 9, there is shown a schematic view showing a wiper connector according to the present invention assembled with a seventh wiper arm. The seventh wiper arm 700 has on one end thereof a second protruding point 701. The seventh wiper arm 700 is passed and disposed between the two sides of the housing 1 and located between the non-slip portion 118 and the engagement piece 119, and the through hole 121 engages with the second protruding point 701, whereby the seventh wiper arm 700 is fastened to the housing 1. The seventh wiper arm 700 is a flat wiper arm. Moreover, in disassembly of the seventh wiper arm 700, the seventh wiper arm 700 is bent downward slightly by the application of force to separate the second protruding point 701 from the through hole 121. Afterwards, a pulling force is applied to the seventh wiper arm 700 toward one end of the housing 1, so that the seventh wiper arm 700 can be successfully disassembled.

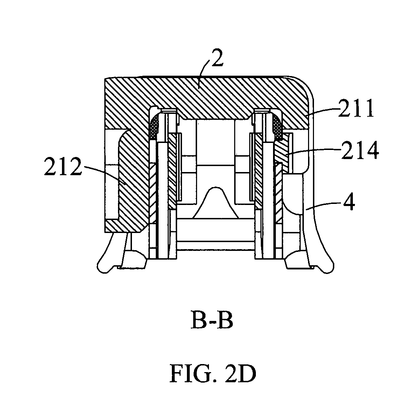

Again referring to FIGS. 1 and 2(D), FIG. 2(D) is FIG. 2(B) viewed along the cross section B-B. The housing 1 may be assembled with the first connector 2, the second connector 3, and the cover 4. The first connector 2 includes a first side wall 211, a second side wall 212, and an upper arm 215. One end of the first side wall 211 is provided with a first protruding point 214. The first connector 2 can be circumferentially disposed on the top surface of the housing 1 by assembling the first protruding point 214 into the position limiting blind hole 116. One end of the second side wall 212 is connected with the other end of the first side wall 211 by the upper arm 215. A connection hole 213 is provided at a position on the second side wall 212 corresponding to the first position limiting through hole 111.

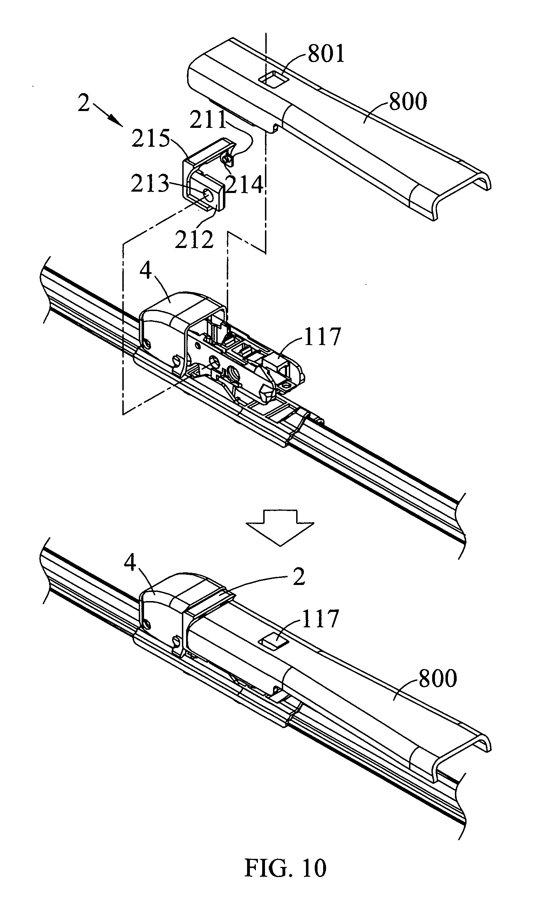

Referring to FIG. 10, there is shown a schematic view showing a housing of a wiper connector according to the present invention assembled with an eighth wiper arm. The first protruding point 214 on the first side wall 211 is assembled into the position limiting blind hole 116, whereby the first connector 2 is circumferentially disposed on the top surface of the housing 1, the long side of the second side wall 212 faces one end of the housing 1, and the connection hole 213 corresponds to the first position limiting through hole 111. The width of the housing 1 is increased by assembling the first connector 2 to the housing 1. The eighth wiper arm 800 has on the top surface thereof a fourth opening 801. The eighth wiper arm 800 is fitted on the top surface of the housing 1 to surround the housing 1 and the L-shaped first connector 2. The pressing portion 117 engages with the fourth opening 801 so that the eighth wiper arm 800 is disposed on the housing 1. The eighth wiper arm 800 is a wide-type wiper arm. Moreover, in disassembly of the eighth wiper arm 800, the pressing portion 117 is pressed downwards by the application of force to allow the eighth wiper arm 800 to be slightly separated from the housing 1. Afterwards, a pulling force is applied to the eighth wiper arm 800 toward one end of the housing 1, so that the eighth wiper arm 800 can be successfully disassembled.

Still referring to FIG. 1, the second connector 3 includes an abutment surface 311 and an insertion pin portion 312. The abutment surface 311 is a solid plane which is connected with the insertion pin portion 312. The insertion pin portion 312 is a cylinder which passes through the second position limiting through hole 112. The insertion pin portion 312 is provided on the end face of the cylinder with a crossed slot 315 and a chamfer 313. The chamfer 313 facilitates the insertion pin portion 312 passing through the second position limiting through hole 112. The insertion pin portion 312 further has a locking portion 314. The locking portion 314 allows the insertion pin portion 112 to be locked in the second position limiting through hole 314. The crossed slot 315 provides a shrinking space when assembling the insertion pin portion 312 and the second position limiting through hole 112.

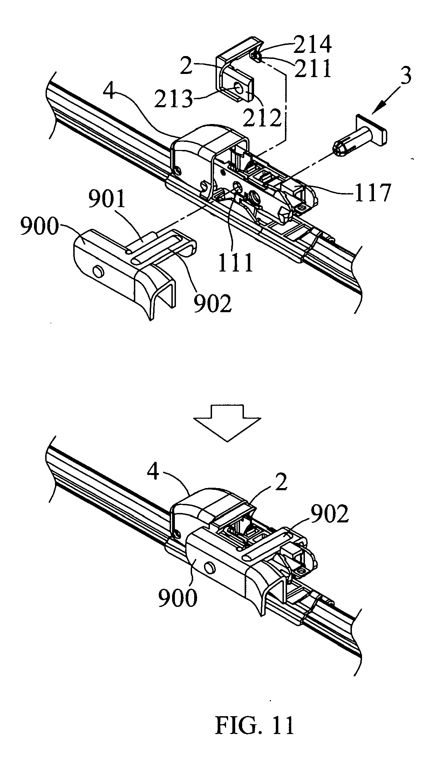

Referring to FIG. 11, there is shown a schematic view showing a wiper connector according to the present invention assembled with a ninth wiper arm. The ninth wiper arm 900 has a third connecting rod 901 and a fourth connecting rod 902. The second connector 3 is passed into the second position limiting through hole 112 by the insertion pin portion 312 and its abutment surface 311 is next to one side surface of the housing 1. The first connector 2 is mounted into the position limiting blind hole 116 by means of the first protruding point 214, so that the first connector 2 is circumferentially disposed on the top surface of the housing 1 and the connection hole 213 corresponds to the first position limiting through hole 111. At this time, the first connector 2 and the second connector 3 are disposed respectively on one side surface of the housing 1. The third connecting rod 901 is passed into the connection hole 213 and through the first position limiting through hole 111, whereby the position of the ninth wiper arm 900 is limited to the housing 1 and the fourth connecting rod 902 is lapped over the top surface of the housing 1. The second connector 3 on the other side surface also limits the fourth connecting rod 902 and thus the ninth wiper arm 900 is assembled to the housing 1. The ninth wiper arm 900 is a side-connecting wiper arm. Moreover, in disassembly of the ninth wiper arm 900, the ninth wiper arm 900 is firstly rotated upward 90 degrees so that the ninth wiper arm 900 is perpendicular to the housing 1. Afterwards, a force is applied to push the third connecting rod 901 out of the first position limiting through hole 111, so that the ninth wiper arm 900 can be successfully disassembled.

## Claims

1. A wiper connector, comprising:
a housing (1) having two sides, a central part (10) and a hollow part (11), wherein the central part (10) and the hollow part (11) being located between the two sides and respectively adjacent to one end and another end of the housing (1), including:
at least one locating column (115), the locating column (115) being a protruding block and convexly provided on one side surface between both ends of the housing (1), and one end of the protruding block being provided with a bevel surface;
at least one position limiting blind hole (116), concavely provided on one side surface of the housing (1) and located between the locating column (115) and one end of the housing (1);
a first joint portion (124), disposed on the other end of the housing (1);
a cover (4), including:
a second joint portion (411), disposed on one end of the cover (4), the second joint portion (411) being connected with the first joint portion (124) to allow the cover (4) to be pivotally connected to the other end of the housing (1); and
a locating hole (413), provided on the other end of the cover (4), the locating hole (413) being connected to the locating column (115);
a skirt portion (414), extending out of the other end of the cover (4) and next to the locating hole (413), and the thickness of the skirt portion (414) being greater than the thickness of the remaining portions of the cover (4);
a breakthrough hole (415), provided between the second joint portion (411) and the skirt portion (414), and located next to the locating hole (413), the breakthrough hole (415) being coupled with the locating column (115) by the bevel surface of the protruding block, and the portion of the protruding block where no bevel surface is formed being locked in the locating hole (413); and
a position limiting block (412), provided on the inner surface of the cover (4), and the position limiting block (412) just abutting against the top surface of the housing (1) when the cover (4) is closed on the housing (1); and
a first connector (2), including:
an upper arm (215);
a first side wall (211), one end of the first side wall (211) extending toward the position limiting blind hole (116) and being provided with a first protruding point (214), and the first protruding point (214) allowing the first connector (2) to be assembled into the position limiting blind hole (116); and
a second side wall (212), one end of the second side wall (212) being connected with the other end of the first side wall (211) by the upper arm (215), two corresponding side surfaces of the housing (1) being sandwiched between the second side wall (212) and the first protruding point (214), and the width of the housing (1) being increased after the first protruding point (214) of the first side wall (211) and the position limiting blind hole (116) are assembled, wherein the first connector is circumferentially disposed on the top surface of the housing (1) by assembling the first protruding point (214) into the position limiting blind hole(116).

2. The wiper connector as recited in claim 1, wherein the central part (10) further includes:
a first position limiting through hole (111), provided between one end of the housing (1) and the locating column (115), and passing through the central part (10) and two sides of the housing (1);
a first engagement portion (113), disposed at a position on the top surface of the housing (1) corresponding to the first position limiting through hole (111) and extending into the first position limiting through hole (111);
a second position limiting through hole (112), provided between one end of the housing (1) and the first position limiting through hole (111), and passing through the central part (10) and two sides of the housing (1); and
a second engagement portion (114), disposed at a position on the top surface of the housing (1) corresponding to the second position limiting through hole (112) and extending into the second position limiting through hole (112);
wherein the diameter of the second position limiting through hole (112) is different from the diameter of the first position limiting through hole (111).

3. The wiper connector as recited in claim 2, wherein the housing (1) further includes:
a pressing portion (117), convexly disposed between the top surface of the housing (1) and the second engagement portion (114);
an outer bump (122), convexly provided at a position between two sides of the housing (1) and adjacent to one end of the housing (1);
a non-slip portion (118), provided at a position between two sides of the housing (1) and adjacent to the second position limiting through hole (112), and extends to one end of the housing (1);
an engagement piece (119), provided between two sides of the housing (1) and between the pressing portion (117) and the non-slip portion (118), protruding out of one end of the housing (1), and the portion of the engagement piece (119) protruding out of the housing (1) being provided with a through hole (121); and
at least one position limiting wall (120), provided on an inner wall at two sides of the housing (1) between the position limiting blind hole (116) and the locating column (115).

4. The wiper connector as recited in claim 1, wherein the wiper connector further comprises a second connector (3), including:
an abutment surface (311), the abutment surface (311) being a solid plane; and
an insertion pin portion (312), connected to the abutment surface (311) and passing through two sides of the housing (1).

5. The wiper connector as recited in claim 4, wherein the central part (10) further includes:
a first position limiting through hole (111), provided between one end of the housing (1) and the locating column (115), and passing through the central part (10) and two sides of the housing (1); and
a first engagement portion (113), disposed at a position on the top surface of the housing (1) corresponding to the first position limiting through hole (111) and extending into the first position limiting through hole (111);
a second position limiting through hole (112), provided between one end of the housing (1) and the first position limiting through hole (111), and passing through the central part (10) and two sides of the housing (1) to allow the insertion pin portion (312) to pass through; and
a second engagement portion (114), disposed at a position on the top surface of the housing (1) corresponding to the second position limiting through hole (112) and extending into the second position limiting through hole (112);
wherein the diameter of the second position limiting through hole (112) is different from the diameter of the first position limiting through hole (111).

6. The wiper connector as recited in claim 5, wherein the housing (1) further includes:
a pressing portion (117), convexly disposed between the top surface of the housing (1) and the second engagement portion (114);
an outer bump (122), convexly provided at a position between two sides of the housing (1) and adjacent to one end of the housing (1);
a non-slip portion (118), provided at a position between two sides of the housing (1) and adjacent to the second position limiting through hole (112), and extends to one end of the housing (1);
an engagement piece (119), provided between two sides of the housing (1) and between the pressing portion (117) and the non-slip portion (118), protruding out of one end of the housing (1), and the portion of the engagement piece (119) protruding out of the housing (1) being provided with a through hole (121); and
at least one position limiting wall (120), provided on an inner wall at two sides of the housing (1) between the position limiting blind hole (116) and the locating column (115).

7. The wiper connector as recited in claim 5, wherein a connection hole (121) is further provided at a position on the second side wall (212) corresponding to the first position limiting through hole (111).

8. The wiper connector as recited in claim 4, wherein the insertion pin portion (312) further includes:
a crossed slot (315), providing an shrinking space when assembling the insertion pin portion (312) and the second position limiting through hole (112);
a chamfer (313), provided on one end of the crossed slot (315); and
a locking portion (314), provided at a position next to the chamfer (313) to allow the insertion pin portion (312) to be locked in the second position limiting through hole (112).

## Patentansprüche

1. Ein Wischer-Anschlußteil, bestehend aus:
einem Gehäuse (1) mit zwei Seiten, einem mittleren Teil (10) und einem hohlen Teil (11), wobei das mittlere Teil (10) und das hohle Teil (11) zwischen den beiden Seiten und je angrenzend zu einem Ende bzw. angrenzend zum anderen Ende des Gehäuses (1) angeordnet sind, weiter umfassend:
mindestens einen Arretierzapfen (115), wobei der Arretierzapfen (115) als ein vorstehender Block und konvex auf einer Seitenfläche zwischen zwei Enden des Gehäuses (1) geformt ist, während ein Ende dieses vorstehenden Blocks eine abgeschrägte Fläche aufweist;
mindestens eine positionsbegrenzende Grundbohrung (116), die konkav auf einer Seitenfläche des Gehäuses (1) und zwischen dem Arretierzapfen (115) und einem Ende des Gehäuses (1) geformt ist;
eine erstes Gelenkteil (124), das an dem anderen Ende des Gehäuses (1) angeordnet ist;
einen Deckel (4), bestehend aus:
einem zweiten Gelenkteil (411), das an einem Ende des Deckels (4) angeordnet ist, wobei das zweite Gelenkteil (411) mit dem ersten Gelenkteil (124) verbunden ist, um den Deckel (4) drehgelenkig am anderen Ende des Gehäuses (1) zu befestigen;
einer Paßbohrung (413), vorgesehen an dem anderen Ende des Deckels (4), wobei die Paßbohrung (413) mit dem Arretierzapfen (115) verbunden ist;
einem Flankenelement (414), das sich aus dem anderen Ende des Deckels (4) und neben der Paßbohrung (413) erstreckt, wobei die Dicke des Flankenelements (414) größer als die Dicke der übrigen Teile des Deckels (4) ist;
einem durchführenden Loch (415), das zwischen dem zweiten Gelenkteil (411) und dem Flankenelement (414) sowie neben der Paßbohrung (413) angeordnet ist; wobei das durchführende Loch (415) mit dem Arretierzapfen (115) über die abgeschrägte Fläche des vorstehenden Blocks gekoppelt ist, wobei das Teil des vorstehenden Teils, an dem keine abgeschrägte Fläche gebildet ist, in der Paßbohrung (413) angeordnet ist; und einem positionsbegrenzenden Block (412), der auf der Innenfläche des Deckels (4) gebildet ist, wobei der positionsbegrenzende Block (412) an die obere Fläche des Gehäuses (1) anstößt, wenn der Deckel (4) auf dem Gehäuse (1) geschlossen ist; und
ein erstes Anschlußteil (2), bestehend aus:
einem oberen Träger (215);
einer ersten Seitenwand (211), wobei sich ein Ende dieser ersten Seitenwand (211) zu einer positionsbegrenzenden Grundbohrung (116) erstreckt und eine erste vorstehende Stelle (214) aufweist, wobei die erste vorstehende Stelle (214) ein Montieren des ersten Anschlußteils (2) in der positionsbegrenzenden Grundbohrung (116) ermöglicht; und einer zweiten Seitenwand (212), wobei ein Ende dieser zweiten Seitenwand (212) mittels des oberen Trägers (215) am anderen Ende der ersten Seitenwand (211) befestigt ist, zwei übereinstimmende Seitenflächen des Gehäuses (1) zwischen der zweiten Seitenwand (212) und der ersten vorstehenden Stelle (214) befestigt sind, wobei die Breite des Gehäuses (1) nach der Montage der ersten vorstehenden Stelle (214) der ersten Seitenwand (211) und der positionsbegrenzenden Grundbohrung (116) vergrößert ist, wobei das erste Anschlußteil (2) durch Montieren der ersten vorstehenden Stelle (214) in die positionsbegrenzende Grundbohrung (116) um die obere Fläche des Gehäuses (1) herum angeordnet ist.

2. Das Wischer-Anschlußteil nach Anspruch 1, wobei das mittlere Teil (10) weiter die folgenden Elementen umfasst:
ein erstes positionsbegrenzendes durchgehendes Loch (111), das zwischen einem Ende des Gehäuses (1) und dem Arretierzapfen (115) gebildet ist und das durch das mittlere Teil (10) und die beiden Seiten des Gehäuses (1) fährt;
ein erstes Eingriffsteil (113), das in einer Position auf der oberen Fläche des Gehäuses (1) in Übereinstimmung mit dem ersten positionsbegrenzenden durchgehenden Loch (111) angeordnet ist und sich in das erste positionsbegrenzende durchgehende Loch (111) erstreckt;
ein zweites positionsbegrenzendes durchgehendes Loch (112), das zwischen einem Ende des Gehäuses (1) und dem ersten positionsbegrenzenden durchgehenden Loch (111) angeordnet ist und das durch das mittlere Teil (10) und die beiden Seiten des Gehäuses (1) führt; und
ein zweites Eingriffsteil (114), das in einer Position auf der oberen Fläche des Gehäuses (1) in Übereinstimmung mit dem zweiten positionsbegrenzenden durchgehenden Loch (112) angeordnet ist und sich in das zweite positionsbegrenzende durchgehende Loch (112) erstreckt; wobei sich der Durchmesser dieses zweiten positionsbegrenzenden durchgehenden Loches (112) von dem Durchmesser des ersten positionsbegrenzenden durchgehenden Loches (111) unterscheidet.

3. Das Wischer-Anschlußteil nach Anspruch 2, wobei das Gehäuse (1) weiter die folgenden Elemente umfasst:
ein Preßteil (117), das konvex zwischen der oberen Fläche des Gehäuses (1) und dem zweiten Einrückteil (114) angeordnet ist;
einen äußeren Vorsprung (122), der konvex in einer Position zwischen zwei Seiten des Gehäuses (1) und angrenzend zu einem Ende des Gehäuses (1) gebildet ist;
einen rutschfesten Teil (118), der in einer Position zwischen zwei Seiten des Gehäuses (1) und angrenzend zum zweiten positionsbegrenzenden durchgehenden Loch (112) angeordnet ist und sich zu einem Ende des Gehäuses (1) erstreckt;
ein Eingriffselement (119), das zwischen zwei Seiten des Gehäuses (1) und zwischen dem Preßteil (117) sowie dem rutschfesten Teil (118) angeordnet ist und aus einem Ende des Gehäuses (1) vorsteht, wobei ein Teil des Einrückelements (119), das aus dem Gehäuse (1) vorsteht, ein durchgehendes Loch (121) aufweist; und
mindestens eine positionsbegrenzende Wand (120), die an einer Innenwand auf zwei Seiten des Gehäuses (1) zwischen der positionsbegrenzenden Grundbohrung (116) und dem Arretierzapfen (115) vorgesehen ist.

4. Das Wischer-Anschlußteil nach Anspruch 1, wobei das Wischer-Anschlußteil weiter ein zweites Anschlußteil (3) umfasst, welches die folgenden Elemente aufweist:
eine Stoßfläche (311), wobei diese Stoßfläche (311) als eine feste Fläche gebildet ist; und einem Einfügungsstift (312), der an der Stoßfläche (311) befestigt ist und zwei Seiten des Gehäuses (1) durchgreift.

5. Das Wischer-Anschlußteil nach Anspruch 4, wobei das mittlere Teil (10) weiter die folgenden Elemente umfasst:
ein erstes positionsbegrenzendes durchgehendes Loch (111), das zwischen einem Ende des Gehäuses (1) und dem Arretierzapfen (115) gebildet ist und das das mittlere Teil (10) und die beiden Seiten des Gehäuses (1) durchgreift; und
ein erstes Eingriffsteil (113), das in einer Position auf der oberen Fläche des Gehäuses (1) in Übereinstimmung mit dem ersten positionsbegrenzenden durchgehenden Loch (111) angeordnet ist und sich in dieses erste positionsbegrenzende durchgehende Loch (111) erstreckt;
ein zweites positionsbegrenzendes durchgehendes Loch (112), das zwischen einem Ende des Gehäuses (1) und dem ersten positionsbegrenzenden durchgehenden Loch (111) gebildet ist und das das mittlere Teil (10) sowie die beiden Seiten des Gehäuses (1) durchgreift, um dem Einfügungsstift (312) ein Einfahren in dieses zweite positionsbegrenzende durchgehende Loch (112) zu ermöglichen; und
ein zweites Eingriffsteil (114), das in einer Position auf der oberen Fläche des Gehäuses (1) in Übereinstimmung mit dem zweiten positionsbegrenzenden durchgehenden Loch (112) angeordnet ist und sich in dieses zweite positionsbegrenzende durchgehende Loch (112) erstreckt; wobei sich der Durchmesser dieses zweiten positionsbegrenzenden durchgehenden Loches (112) von dem Durchmesser des ersten positionsbegrenzenden durchgehenden Loch (111) unterscheidet.

6. Das Wischer-Anschlußteil nach Anspruch 5, wobei das Gehäuse (1) weiter die folgenden Elemente umfasst:
ein Preßteil (117), das konvex zwischen der oberen Fläche des Gehäuses (1) und dem zweiten Eingriffsteil (114) angeordnet ist;
einen äußeren Vorsprung (122), der konvex in einer Position zwischen zwei Seiten des Gehäuses (1) und angrenzend zu einem Ende des Gehäuses (1) gebildet ist;
einen rutschfesten Teil (118), der in einer Position zwischen zwei Seiten des Gehäuses (1) und angrenzend zum zweiten positionsbegrenzenden durchgehenden Loch (112) angeordnet ist und sich zu einem Ende des Gehäuses (1) erstreckt;
ein Eingriffselement (119), das zwischen zwei Seiten des Gehäuses (1) und zwischen dem Preßteil (117) und dem rutschfesten Teil (118) angeordnet ist und aus einem Ende des Gehäuses (1) vorsteht, wobei das Teil des Einrückelements (119), das aus dem Gehäuse (1) vorsteht, ein durchgehendes Loch (121) aufweist; und
mindestens eine positionsbegrenzende Wand (120), die an einer Innenwand auf zwei Seiten des Gehäuses (1) zwischen der positionsbegrenzenden Grundbohrung (116) und dem Arretierzapfen (115) angeordnet ist.

7. Das Wischer-Anschlußteil nach Anspruch 5, wobei in einer Position an der zweiten Seitenwand (212) in Übereinstimmung mit dem ersten positionsbegrenzenden durchgehenden Loch (111) ein Verbindungsloch (121) gebildet ist.

8. Das Wischer-Anschlußteil nach Anspruch 4, wobei der Einfügungsstift (312) weiter die folgenden Elemente umfasst:
einen Kreuzschlitz (315), der einen Schrumpfraum bildet für das Einführen des Einfügungsstiftes (312) in das zweite positionsbegrenzende durchgehende Loch (112);
eine Abschrägung (313), die an einem Ende des Kreuzschlitzes (315) gebildet ist; und
ein Sperrelement (314), das in einer Position neben der Abschrägung (313) angeordnet ist, um den Einfügungsstift (312) in dem zweiten positionsbegrenzenden durchgehenden Loch (112) zu verriegeln.

## Revendications

1. Un connecteur d'essuie-glace, comprenant :
un boîtier (1) ayant deux côtés, une partie centrale (10) et une partie creuse (11),
dans lequel la partie centrale (10) et la partie creuse (11) sont situées entre les deux côtés et respectivement adjacentes à une extrémité et une autre extrémité du boîtier (1), comprenant :
au moins une colonne de positionnement (115), la colonne de positionnement (115) étant un bloc en saillie et prévue de manière convexe sur une surface latérale entre les deux extrémités du boîtier (1), et une extrémité du bloc en saillie étant pourvue d'une surface en biseau ;
au moins un trou borgne de limitation de position (116), prévu de manière concave sur une surface latérale du boîtier (1) et situé entre la colonne de positionnement (115) et une extrémité du boîtier (1) ;
une première partie d'articulation (124), disposée sur l'autre extrémité du boîtier (1) ;
un couvercle (4), comprenant :
une deuxième partie d'articulation (411), disposée sur une extrémité du couvercle (4), la deuxième partie d'articulation (411) étant reliée à la première partie d'articulation (124) pour permettre au couvercle (4) d'être relié de manière pivotante à l'autre extrémité du boîtier (1) ; et un trou de positionnement (413), prévu sur l'autre extrémité du couvercle (4), le trou de positionnement (413) étant relié à la colonne de positionnement (115) ;
une partie en forme de flanc (414), s'étendant à l'extérieur de l'autre extrémité du couvercle (4) et près du trou de positionnement (413), et l'épaisseur de la partie en forme de flanc (414) étant supérieure à l'épaisseur des parties restantes du couvercle (4) ;
un trou de percée (415), prévu entre la deuxième partie d'articulation (411) et la partie en forme de flanc (414), et situé près du trou de positionnement (413), le trou de percée (415) étant couplé avec la colonne de positionnement (115) par la surface en biseau du bloc en saillie, et la partie du bloc en saillie sans surface en biseau étant verrouillée dans le trou de positionnement (413) ; et un bloc de limitation de position (412), prévu sur la surface interne du couvercle (4), et le bloc de limitation de position (412) vient juste en butée contre la surface supérieure du boîtier (1) quand le couvercle (4) est fermé sur le boîtier (1) ; et
un premier connecteur (2), comprenant :
un bras supérieur (215) ;
une première paroi latérale (211), une extrémité de la première paroi latérale (211) s'étendant vers le trou borgne de limitation de position (116) et étant pourvue d'un premier point en saillie (214), et le premier point en saillie (214) permettant au premier connecteur (2) d'être assemblé dans le trou borgne de limitation de position (116) ; et une deuxième paroi latérale (212), une extrémité de la deuxième paroi latérale (212) étant reliée avec l'autre extrémité de la première paroi latérale (211) par le bras supérieur (215), deux surfaces latérales correspondantes du boîtier (1) étant prises en sandwich entre la deuxième paroi latérale (212) et le premier point en saillie (214), et la largeur du boîtier (1) étant accrue après que le premier point en saillie (214) de la première paroi latérale (211) et le trou borgne de limitation de position (116) sont assemblés, dans lequel le premier connecteur est disposé de manière circonférentielle sur la surface supérieure du boîtier (1) par l'assemblage du premier point en saillie (214) dans le trou borgne de limitation de position (116).

2. Le connecteur d'essuie-glace selon la revendication 1, dans lequel la partie centrale (10) comprend en outre :
un premier trou perforant de limitation de position (111), prévu entre une extrémité du boîtier (1) et la colonne de positionnement (115), et passant au travers de la partie centrale (10) et de deux côtés du boîtier (1) ;
une première partie d'engagement (113), disposée à une position sur la surface supérieure du boîtier (1) correspondant au premier trou perforant de limitation de position (111) et s'étendant dans le premier trou perforant de limitation de position (111) ;
un deuxième trou perforant de limitation de position (112), prévu entre une extrémité du boîtier (1) et le premier trou perforant de limitation de position (111), et passant au travers de la partie centrale (10) et de deux côtés du boîtier (1) ; et
une deuxième partie d'engagement (114), disposée à une position sur la surface supérieure du boîtier (1) correspondant au deuxième trou perforant de limitation de position (112) et s'étendant dans le deuxième trou perforant de limitation de position (112) ; dans lequel le diamètre du deuxième trou perforant de limitation de position (112) est différent du diamètre du premier trou perforant de limitation de position (111).

3. Le connecteur d'essuie-glace selon la revendication 2, dans lequel le boîtier (1) comprend en outre :
une partie de pression (117), disposée de manière convexe entre la surface supérieure du boîtier (1) et la deuxième partie d'engagement (114) ;
une bosse externe (122), disposée de manière convexe à une position entre deux côtés du boîtier (1) et adjacente à une extrémité du boîtier (1) ;
une partie non glissante (118), prévue à une position entre deux côtés du boîtier (1) et adjacente au deuxième trou perforant de limitation de position (112), et s'étendant vers une extrémité du boîtier (1) ;
une pièce d'engagement (119), prévue entre deux côtés du boîtier (1) et entre la partie de pression (117) et la partie non glissante (118), faisant saillie hors d'une extrémité du boîtier (1), et la partie de la pièce d'engagement (119) faisant saillie hors du boîtier (1) étant pourvue d'un trou traversant (121) ; et
au moins une paroi de limitation de position (120), prévue sur une paroi interne sur deux côtés du boîtier (1) entre le trou borgne de limitation de position (116) et la colonne de positionnement (115).

4. Le connecteur d'essuie-glace selon la revendication 1, dans lequel le connecteur d'essuie-glace comprend en outre un deuxième connecteur (3), comprenant :
une surface de butée (311), la surface de butée (311) étant un plan solide ; et une partie de broche d'insertion (312), reliée à la surface de butée (311) et passant au travers de deux côtés du boîtier (1).

5. Le connecteur d'essuie-glace selon la revendication 4, dans lequel la partie centrale (10) comprend en outre :
un premier trou perforant de limitation de position (111), disposé entre une extrémité du boîtier (1) et la colonne de positionnement (115), et passant au travers de la partie centrale (10) et de deux côtés du boîtier (1) ; et
une première partie d'engagement (113), disposée à une position sur la surface supérieure du boîtier (1) correspondant au premier trou perforant de limitation de position (111) et s'étendant dans le premier trou perforant de limitation de position (111) ;
un deuxième trou perforant de limitation de position (112), prévu entre une extrémité du boîtier (1) et le premier trou perforant de limitation de position (111), et passant au travers de la partie centrale (10) et de deux côtés du boîtier (1) pour permettre à la partie de broche d'insertion (312) de passer à travers ; et une deuxième partie d'engagement (114), disposée à une position sur la surface supérieure du boîtier (1) correspondant au deuxième trou perforant de limitation de position (112) et s'étendant dans le deuxième trou perforant de limitation de position (112) ; dans lequel le diamètre du deuxième trou perforant de limitation de position (112) est différent du diamètre du premier trou perforant de limitation de position (111).

6. Le connecteur d'essuie-glace selon la revendication 5, dans lequel le boîtier (1) comprend en outre :
une partie de pression (117), disposée de manière convexe entre la surface supérieure du boîtier (1) et la deuxième partie d'engagement (114) ;
une bosse externe (122), disposée de manière convexe à une position entre deux côtés du boîtier (1) et adjacente à une extrémité du boîtier (1) ;
une partie non glissante (118), prévue à une position entre deux côtés du boîtier (1) et adjacente au deuxième trou perforant de limitation de position (112), et s'étendant vers une extrémité du boîtier (1) ;
une pièce d'engagement (119), prévue entre deux côtés du boîtier (1) et entre la partie de pression (117) et la partie non glissante (118), faisant saillie hors d'une extrémité du boîtier (1), et la partie de la pièce d'engagement (119) faisant saillie hors du boîtier (1) étant pourvue d'un trou traversant (121) ; et
au moins une paroi de limitation de position (120), prévue sur une paroi interne sur deux côtés du boîtier (1) entre le trou borgne de limitation de position (116) et la colonne de positionnement (115).

7. Le connecteur d'essuie-glace selon la revendication 5, dans lequel un trou de connexion (121) est en outre prévu à une position sur la deuxième paroi latérale (212) correspondant au premier trou perforant de limitation de position (111).

8. Le connecteur d'essuie-glace selon la revendication 4, dans lequel la partie de broche d'insertion (312) comprend en outre :
une fente croisée (315), fournissant un espace de réduction lors de l'assemblage de la partie de broche d'insertion (312) et du deuxième trou perforant de limitation de position (112) ;
un chanfrein (313), prévu sur une extrémité de la fente croisée (315) ; et
une partie de verrouillage (314), prévue à une position près du chanfrein (313) pour permettre à la partie de broche d'insertion (312) d'être verrouillée dans le deuxième trou perforant de limitation de position (112).
